# EUROPEAN PATENT APPLICATION

(11) **EP 4 227 826 A1**
(43) Date of publication of application: **16.08.2023**
(21) Application number: 23156080.6
(22) Date of filing: 10.02.2023
(51) Int. Cl.: G06F 16/904

(54) **METHOD AND SYSTEM FOR PROCESSING AND ARRANGING DATA ITEMS**

(30) Priority: 10.02.2022 CH 1202022
(71) Applicant: Zebic, Gregor, 8304 Wallisellen (CH)
(72) Inventor: Zebic, Gregor, 8304 Wallisellen (CH)
(74) Representative: IPrime Rentsch Kaelin AG

(57) **Abstract**

The present invention relates to a for processing and arranging data items. A method comprises the steps of receiving, at a user device from a central system, multiple data items for conducting a selection; providing the data items in a grid to enable the selection by the user; in response to receiving a first selection, activating the selected data item to be an activated data item; in response to receiving a second selection on the activated data item, expanding the activated data item to an expanded data item; wherein subsequent data items are shifted within the grid.

## Description

The present invention relates to a method for processing and arranging data items. Furthermore, the present invention relates to a system and a computer program for processing and arranging data items.

### Technological background

The efficient and successful processing of data items depends on various factors. Navigating through a structure in computer-readable content can be difficult as the volume of content is immense or increases.

For example, some electronic catalogues or shops with digital content can be arranged in a certain structure. Some users may wish to navigate to different sections to find relevant items.

For applications where the display size is limited, e.g., displays or smartphones, tablets etc, it can be difficult to fit or view the respective contents.

Some applications may allow a user to navigate from one screen to another to view different portions. These conventional applications, however, often do not provide a user with sufficient or desired items or do not allow to provide the relevant content in a navigable area or region.

Other applications may allow a user to navigate through a limited number of items which can be rendered at a given time.

While applications exist that allow users to move through structures associated with computer-readable content, features which provide enhanced navigation with improved usability remain a desirable objective.

### Summary

An object of the present invention is to overcome the disadvantages of the prior art. It is further an object of the present invention to present and process data items or elements in a more effective manner or in an improved way so that a user can perform his task more efficiently due to the special way in which information is conveyed. In particular, a method and system are to be provided which have a high acceptance by users with respect to applicability and usability.

At least one of these objects has been solved by the features of the independent patent claims.

In particular, according to a first aspect of the present disclosure, the object is achieved by a method for processing and arranging data items. The method comprises the steps of receiving, at a user device from a central system, multiple data items for conducting a selection; providing the data items in a grid to enable the selection by the user; in response to receiving a first selection, activating the selected data item to be an activated data item; in response to receiving a second selection on the activated data item, expanding the activated data item to an expanded data item; wherein subsequent data items are shifted within the grid.

The shifting of the subsequent data items takes place advantageously within a predefined or pe-used area. No further or additional space is necessary. The expansion of the activated data item to the expanded data item is also advantageously performed within the same visible area and brings the data item in a virtual sense closer to the user. No additional screen is necessary, but more data can be provided within the defined visible area of the same page.

Further to receiving a third selection and a fourth selection to a further data item, the expanded data item can return to the state of the activated data item. This has the advantage that activated data item remains active, visible, and available. If further selections to further data items are received, each activated data item can remain activated. This also ensures visibility and availability. Each activated data item as well as the respective activated data item can be indicated, marked, or chosen for further processing.

It is advantageous that expanding the activated data item further comprises including additional data to the data item, because then more item related content can be made available.

It is additionally advantageous if expanding the activated data item to the expanded data item further comprises providing options for loading a next data item or a previous data item within the size of the expanded data item. This allows to browse through the various data items in an expanded view and within nearly the same area, but with more data available.

The grid is a so-called intelligent grid that allows an arrangement of data items based on end user on-site and off-site activities, recommendations engine, cross-sale and up-sale attributes and preferred system/retailer offerings. This has the advantage that the data items are automatically loaded and arranged without being limited to a certain number of items or their specific arrangement.

The grid allows an arrangement based on end user generated activity data and a system recommendations engine.

The loading of subsequent data items in response to previously selected data items has the advantage, that only relevant items are brought forward. Unnecessary or items not being relevant or of interest are avoided.

If a deselection of the expanded data item is received, the expanded data item returns to the state of the activated data item. This allows to keep the data item active and relevant. The focus can be changed or redirected.

Each selection of one data item can comprise changing or turning the data item within the original area of the one data item. This ensures the same area is used to represent more data of said data item and no additional space is used up.

If expanding the activated data item comprises arranging the expanded data item below a row including the activated data item, then the relevance of the activated data can be upheld. Display or screen space can be effectively used or saved, while at the same time a better focus can be guaranteed.

If expanding the activated data item comprises expanding the activated data item to the expanded data item to a width that is substantially identical or smaller than a previous row within the grid, then a clear arrangement can be guaranteed through the change in the display division. The data items on display will substantially not overlap and thus remain visible. No pop-up or additional screen is necessary.

When the subsequent data items are shifted within the grid such that the expanded data item is arranged in the upper portion, then a defined easy to access area is maintained. If subsequent data items are shifted within the grid such that at least further data items within two or more rows are to be selected, then a determined selection region is provided that allows an easy selection of data items with the same area.

A further aspect of the present disclosure relates to a system for arranging and processing data items comprising a central system and at least a user device configured to carry out the method as described.

With a computer program for processing and arranging data items, the object is achieved in that the computer program comprises instructions which, when the computer program is executed by a user device in the system, cause the user device and/or the central system device to carry out the steps of the disclosed method.

A computer-readable data carrier according to the present disclosure may have stored thereon a computer program according to the present disclosure.

The solutions according to the present disclosure can be combined as desired and further improved by the following embodiments that are advantageous on their own in each case. Unless specified to the contrary, the embodiments can be readily combined with each other. A skilled person will easily understand that all features of the present disclosure may be implemented in a system or device and may be implemented as and/or constitute steps of a method and/or computer program according to the present disclosure.

### Brief description of the drawings

The invention will be described hereinafter in more detail and in an exemplary manner using advantageous embodiments and with reference to the drawings. The described embodiments are only possible configurations in which, however, individual features as described above can be provided independently of one another or can be omitted.
- Fig. 1: is a client-server environment configured to implement exemplary embodiments of the present disclosure.
- Fig. 2: is a block diagram of an exemplary computer-readable content rendering environment according to exemplary embodiments of the present disclosure.
- Fig. 3: is a flowchart illustrating a process implemented by an exemplary embodiment of the present disclosure for presenting and processing data items corresponding underlying computer-readable content.
- Fig. 4: is a further block diagram continuing the diagram of Fig. 3.
- Fig. 5: shows a first schematic view of an embodiment of the present disclosure.
- Fig. 6: shows a second schematic view of an embodiment of the present disclosure.
- Fig. 7: shows a third schematic view of an embodiment of the present disclosure.
- Fig. 8: shows a fourth schematic view of an embodiment of the present disclosure.

### Description of exemplary embodiments

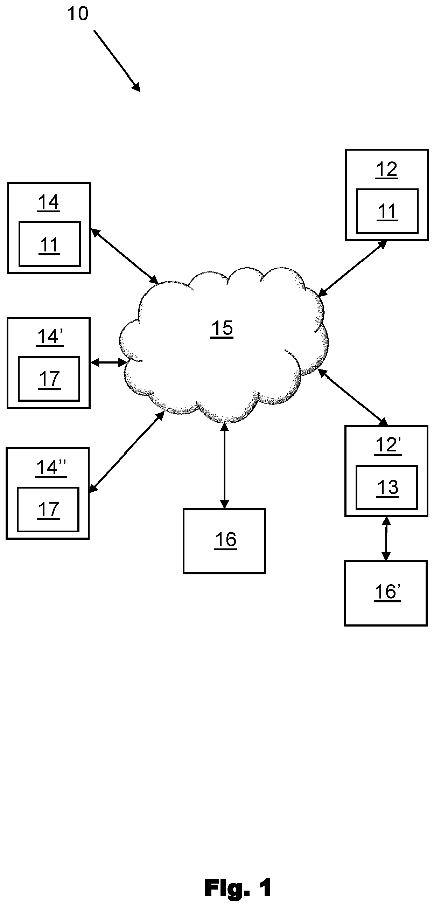

**Fig. 1** shows a client-server environment 10 configured to implement exemplary embodiments of the present disclosure. The client-server environment 10 is configured to implement one or more embodiments of a render environment 11. The environment 10 includes one or more servers 12, 12' operatively coupled to clients 14, 14', 14" via a communication network 15 which can be any network over which information can be transmitted between devices communicatively coupled to the network. For example, the communication network 15 can be the Internet, Intranet, virtual private network (VPN), wide area network (WAN), local area network (LAN), and the like. The environment 10 can include repositories or databases 16, 16 ', which can be operatively coupled to the servers 12, 12' and/or the client devices 14, 14', 14", via the communications network 15. The servers 12, 12', the clients 14, 14', 14", and databases 16, 16' can each be implemented as a computing device. Those skilled in the art will recognize that the databases 16, 16' can be incorporated into one or more of the servers 12, 12' such that one or more of the servers can include databases.

The render environment 11 can be implemented by the server 12. In some embodiments, the render environment 11 can be distributed over different servers 12, 12'. For example, an engine 13 can be implemented on the server 12 and the engine 13 can be implemented on the server 12' as indicated in the figure, while a user interface can be implemented on any of the servers 12, 12' and/or clients 14, 14', 14".

As indicate in the figure, the clients 14', 14"can each include a client-side application 17 programmed and/or configured to interact with the server 12, 12' to access and execute the environment 11. The client 14 can include the environment 11. In some embodiments, the client-side application 17 implemented by the clients 14, 14', 14"can be a web-browser capable of navigating to one or more web pages hosting GUIs of the environment 11. In some embodiments, the client-side application 17 implemented by one or more of the clients 14, 14', 14"can be an application specific to the environment 11 that is installed on the clients 14, 14', 14" to permit interaction with the environment 11 being executed by one or more of the servers 12, 12'.

The databases 16, 16' can store information for use by the environment 10. For example, the databases 16, 16' can store computer-readable content, data items and data item structures of computer-readable content, grid criteria, default and/or modified parameters and/or setting associated with areas that can be displayed, and the like. The databases 16, 16' may be at any suitable time to add, delete, and/or update one or more items in the databases.

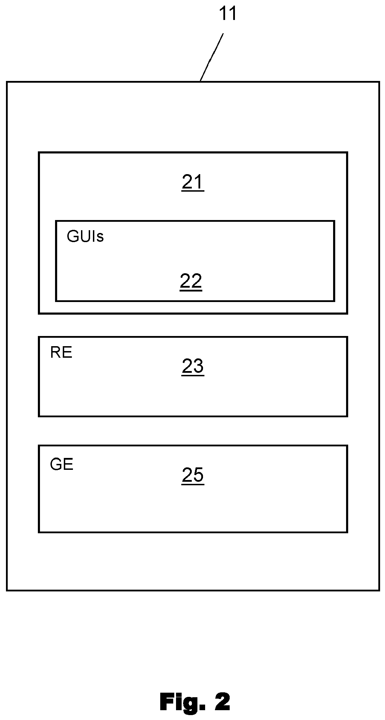

**Fig. 2** **shows** a block diagram of an exemplary computer-readable content rendering environment 11. Exemplary embodiments of the environment 11 can be implemented using hardware, software, and/or a combination thereof. As one example, in some embodiments, a computing device 14, 14', 14"can be programmed and/or configured to implement exemplary embodiments of the environment 11.

In some embodiments, the environment 11 can be a catalogue or purchase application that allows users to browse or select data items and/or can be implemented to facilitate navigation of structured computer-readable content in an electronic environment.

The environment 11 can be programmed and/or include executable code to implement viewable areas with data items rendered on a display associated with a computing device. The viewable areas with data items can be arranged based on a grid structure of computer-readable content included in or referenced by the viewable areas. In exemplary embodiments, the environment 11 can include a user interface 21, a rendering engine 23, and a grid engine 25. The engines can be modules that are specifically adapted.

The user interface 21 can be programmed and/or configured to provide one or more graphical user interfaces (GUIs) 22 through which a user can interact with the environment 11. The GUIs 22 displayed to users can include data selection or entry areas to receive information from the user; user-selectable items or areas that can be selected by the user to cause the environment 11 to perform one or more operations, functions, and/or processes; and/or can include data outputs to display information to the user.

The rendering engine 23 can be programmed and/or configured to interact with the user interface 21 to render data/information via one or more of the GUIs 22 on a display according to one or more parameters and/or settings and/or in response to user inputs received via the user interface 21. For example, in exemplary embodiments, the rending engine 23 can be programmed and/or configured to render a data item in a viewable area corresponding to a grid structure of computer-readable content. In some embodiments, the content of the grid structure can be, for example, a catalogue having a grid arranged content with data items rendered in each of the viewable areas. In some embodiments, the data items rendered in each of the viewable areas can be, for example, results for one or more terms in the grid structure, and the results rendered in the viewable area can correspond to pre-selections or based thereon.

In exemplary embodiments, the rendering engine 23 can be programmed and/or configured to arrange in a viewable area in an ordered sequence corresponding to the grid structure of the content of the data structure. For example, a viewable area including data items corresponding to a certain section can be rendered as a first viewable area. A first selection by a user activates a grid-based data item to an activated data item. A second selection by the user to the activated data item expands the activated data item within the viewable area. Subsequent data items are then shifted within the grid accordingly. Further selections to further data items keep the activated data items activated. The expansion of the activated data item comes with additional data to the data item which the rendering engine 23 can overlay within the viewable areas. Furthermore, the expansion of the activated data item further provides options for loading a next data item or a previous data item within the size of the expanded data item.

The rendering engine 23 can define a total viewable area. The rendering engine 23 can control or specify overall dimensions of a total viewable window within which the viewable area can be rendered. For example, in some embodiments, the rendering engine 23 can be programmed and/or configured to generate a total viewable window that has a specified width and height on the display screen.

In some embodiments, the dimensions of the total viewable window are not specified by the rendering engine 23. In some embodiments, the rendering engine 23 can adjust or resize the total viewable window based on user input and/or device parameters. As one example, a user may resize the total viewable window by selecting a border of the window and dragging the border. As another example, the rending engine 23 can be programmed to obtain and/or identify device specific information corresponding to an electronic device on which the total viewable window is to be displayed and can render the window based on dimensions of a display screen associated with the electronic device. As yet another embodiment, the total viewable window can be resized upon a transition from a portrait view to a landscape view or vice versa. In some embodiments, the window can be displayed by the rendering engine 23 automatically and/or can be displayed by the rendering engine 23 in response to user input via the GUI 22 of the user interface 21.

The viewable area rendered on the display by the rendering engine 23 can form a grid-based viewable area with an arrangement of the data items or elements relative to each other. The applications of at least one filter and weighting leads to a flexible grid where the data items can be processed and arranged in an optimal way. Based on aggregated user data inside the system and preferred retailer selling strategy the grid will position the products. Retailer can refer products to be on higher position on the grid, or products can repeat on the grid while user is scrolling to expose the product more and progress to sales. Retailer also refer the product position based on margin, current stock or connected promotions. The goal is to show more relevant products and data to the user, so that the user gets the information that he/she is familiar with like products or brands that the user purchased already in the past. The grid is created to personalize the experience and fasten up the shopping experience.

The data items or elements displayed in the viewable areas can be arranged in rows, where each row can correspond to a different path through a structure of the content. For example, in some embodiments, the structure can correspond to tree structures that each have a single root node and one or more leaf nodes. In some embodiments, each viewable area can be rendered to display a set of rows representing data items or elements of a list or catalogue. Data items in each of the rows can be selected by a user. A further selection of the selected items expands them as described. This allows to navigate the viewable area that displays the selected and unselected items in a most efficient way.

A two-step selection process of data items can be used to distinguish the items selected by the user as navigation progresses and also to identify which items being followed by a user. In some embodiments, the selected item can have a different colour, size, or shape then the unselected items to indicate that the item has been selected. The selected item may be turned in a virtual sense within the original area of the data item and provide more or additional data.

The rendering engine 23 can be programmed and/or configured to allow a user to expand a data item and arrange the expanded data item below a row including the activated data item. The expanded data item may expand to a width that is substantially identical or smaller than a previous row within the grid. Subsequent data items can be shifted within the grid such that the expanded data item is substantially arranged in the upper portion of the viewable area but could be arranged also at another portion that is suitable, e.g., in the middle portion. The subsequent data items can be shifted within the grid such that at least further data items within two or more rows are to be selectable. A user can deselect, for example, click within the respective expanded data item with a pointing device or touch such that the item returns to the state of the activated data item. The viewable area is basically within an enabled display.

While an exemplary embodiment of the environment 11 has been illustrated with the user interface 21, the rendering engine 23, and the grid engine 25 as separate components, those skilled in the art will recognize that one or more of the user interface 21, rendering engine 23, and grid engine 250 can be integrated with each other. Furthermore, while an exemplary embodiment of the environment 11 includes the user interface 21, rendering engine 23, and grid engine 25 those skilled in the art will recognize that in exemplary embodiments the operations, function, and/or processes of the user interface 21, rendering engine 23, and grid engine 25 can be implemented with more or fewer components.

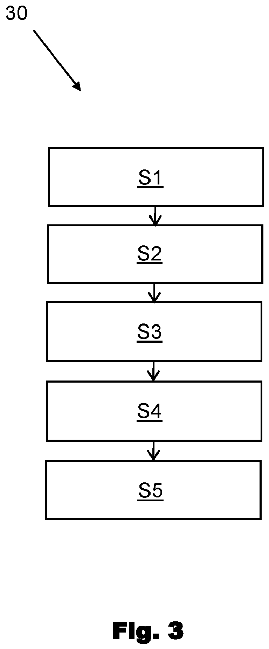

**Fig. 3** shows a flowchart illustrating an exemplary process 30 that can be implemented by the rendering engine 23 and/or gid engine 25 using determination for width, size and arrangement of visible portions of data items within viewable areas. Exemplary embodiments of the process 30 can calculate and define display areas for the respective data items. The process can be implemented specifying a minimum width of a current viewable area or can be implemented to provide a configurable maximum number of a visible area for data items within the viewable area. In exemplary embodiments, the process 30 can be executed to facilitate rendering of viewable data items without knowing the dimensions the viewable area.

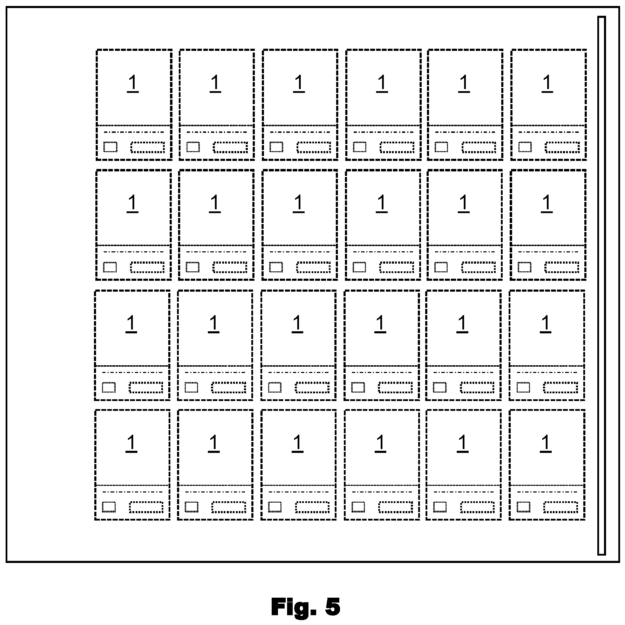

The engines 23, 25 can execute the process 30 to determine the quantity of data items to be rendered and arranged for processing on a display of a client device 14, 14', 14 as indicated and described with reference to Figs. 5 to 7.

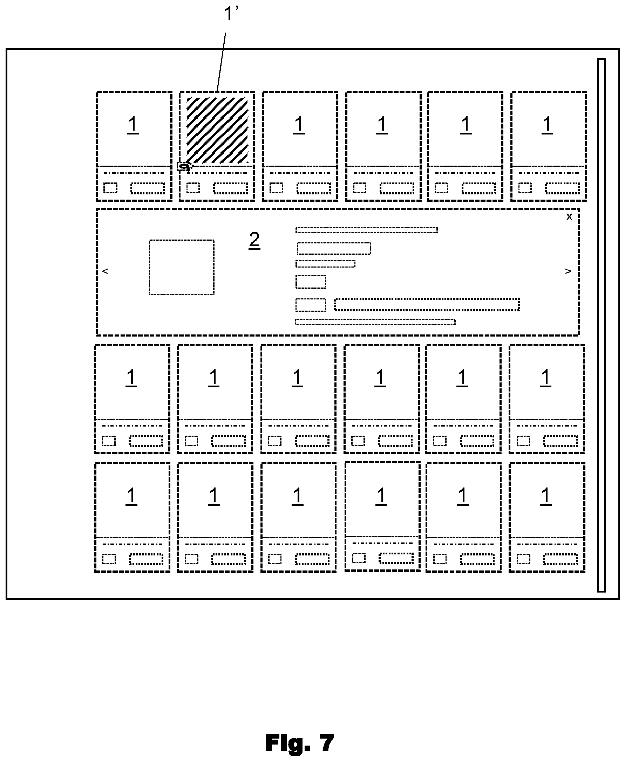

The process 30 may comprise various steps S1 to S5 as required and in any number and form desired to process and arrange data items. In step S1 multiple data items 1 for conducting a selection are received at a user or client device 14, 14', 14" from a central system or server 12, 12'. In step S2 the data items 1 are provided and arranged in a grid to enable the selection by the user. The grid advantageously reacts and adapts to previous selections and use. In response to receiving a first selection, the selected data item is activated in step S3 to be an activated data item 1'. Each selection of one data item may comprises changing or turning the data item 1', 1",1‴ within the original area of the one data item. In response to receiving a second selection on the activated data item 1', in step S4 the activated data item 1' is expanded to an expanded data item 2. Similarly, any other activated data item 1", 1‴ can be expanded to be the expanded data item 2. Subsequent data items are shifted in step S5 within the grid. This enables an optimal processing and arrangement of data items, but also to choose or indicate an interest in nearly an unlimited number of data items. Further to step S4 of expanding the activated data item 1' may comprise arranging the expanded data item 2 below a row including the activated data item 1' but may also comprise to include additional data to the data item or provide options for loading a next data item or a previous data item within the size of the expanded data item 2. The expanding of the data item may comprises expanding the activated data item 1' to a width that is substantially identical or smaller than a previous row within the grid. The subsequent data items can be shifted within the grid such that the expanded data item 2 is arranged in the upper portion of the visible area as indicated in Fig. 7. The subsequent data items can also be shifted within the grid such that at least further data items within two or more rows are selectable.

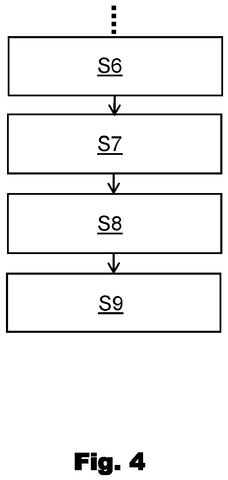

The process 30 may comprise further steps as illustrated in **Fig. 4****.** Further to receiving a third selection and a fourth selection to a further data item, in step S6 the expanded data item 2 can return to the state of the activated data item 1' such that the activated data item 1' remains active and available. In step S7 selections to further data items 1", 1‴ are received, whereby each activated data item 1', 1" 1 ,‴remains activated. In step S8 subsequent data items can be loaded in response to previously selected data items. In step S9, if a deselection is received, the expanded data item 2 returns to the state of the activated data item 1'. Each activated data item 1', 1" 1 may be tuned to its initial appearance by a further selection indicating of no further relevance of the respective item.

Exemplary flowcharts are provided herein for illustrative purposes and are nonlimiting examples of methods. One of ordinary skill in the art will recognize that exemplary methods may include more or fewer steps than those illustrated in the exemplary flowcharts, and that the steps in the exemplary flowcharts may be performed in a different order than the order shown in the illustrative flowcharts.

**Fig. 5** illustrates a first schematic view of an embodiment of the present disclosure. A plurality of data items 1 is displayed within a flexible grid. Each data item 1 is different, i.e., indicates different digital content. None of the data items 1 is selected in Fig. 5. The data items 1 are arranged in rows and columns in a visible area. The multiple data items 1 within the grid are for conducting a selection. On the right-hand side is provided a sliding bar to scroll up and down the multiple gid-based items. In an embodiment the space of two or more data items 1 may be combined to be one item.

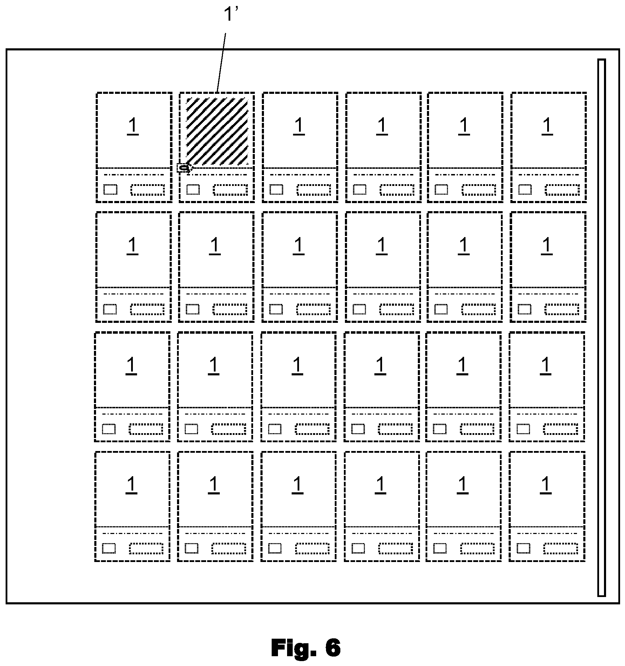

**Fig. 6** illustrates a second schematic view of an embodiment of the present disclosure. In this embodiment one data item is selected to be an activated data item 1' indicating an interest in said particular item. In other words, a first selection has been received and the selected data item has become the activated data item 1'. The item may have turned or changed in size, form or highlighted in any other way through the first selection. The activated data item 1' has not yet been expanded as shown in the next figure.

**Fig. 7** illustrates a third schematic view of an embodiment of the present disclosure. In this embodiment one data item is selected to be the activated data item 1' as can be seen in the figure. The activation can be indicated in any manner, e.g., by a different from, size, colour, hatching. The activated data item 1' has been expanded through a second selection to an expanded data item 2. In other words, a second selection has been received and the activated data item 1' has been expanded to the expanded data item 2. The subsequent data items have been shifted within the grid.

If, for example, a third selection and a fourth selection is received to a further data item 1", 1 ‴ as indicated in the next figure, the expanded data item 2 returns to the state of the activated data item 1' as indicated in Fig. 6.

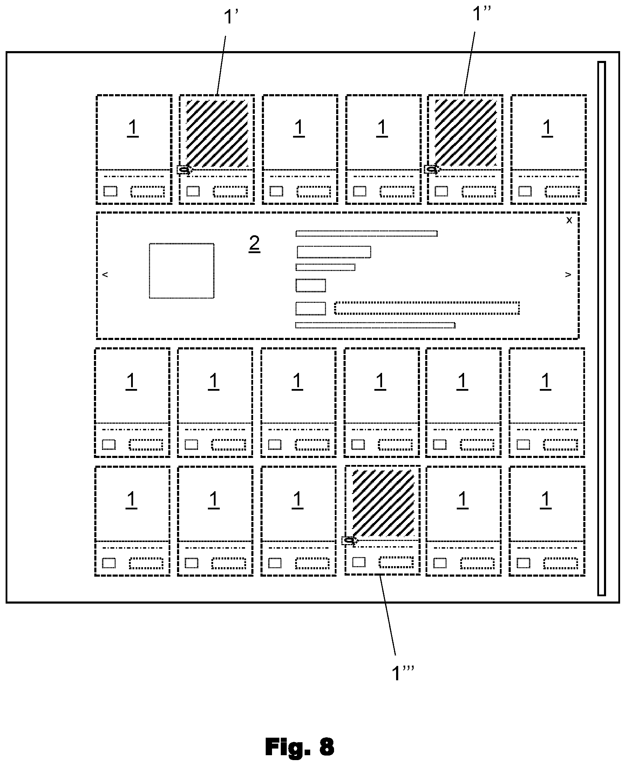

**Fig. 8** illustrates a fourth schematic view of an embodiment of the present disclosure. In this embodiment three data items are selected to be activated data items 1', 1", 1‴. These may have turned or changed or highlighted in any other way through the first selection on each respective item. Here, a second activated data item 1" has been expanded to the expanded data item 2 through a second selection to the second activated data item 1". The subsequent data items have also been shifted within the grid accordingly.

If further selections to further data items are received, each activated data item 1', 1", 1‴ remains activated for future reference and use.

Each activated data item 1', 1", 1‴ indicates on the left lower side a deactivation option to turn the activated data item 1', 1", 1‴ into its initial inactivated state.

The following is a particularly preferred aspect according to the present disclosure which is a method for arranging and navigation data items. The method comprises the steps of executing code to render, on a display device, multiple data items for conducting a selection within a viewable area; providing and pro-grammatically adjusting the data items in a grid to enable the selection by the user and activating the selected data item to be an activated data item; in response to receiving a second selection on the activated data item, expanding the activated data item to an expanded data item within the viewable area. Subsequent data items are shifted within the grid.

Deviations from the above-described embodiments are possible within the scope of the present disclosure.

### Reference signs

- 1: data item
- 1', 1", 1‴: activated data item
- 2: expanded data item

- 10: client-server environment
- 11: render environment
- 12, 12': server
- 14, 14', 14": client, client device
- 15: communication network
- 16, 16': database
- 17: application

- 21: user interface 21
- 22: GUI
- 23: rendering engine
- 25: grid engine

- 30: process

- S1 - S9: steps

## Claims

1. A method for processing and arranging data items, the method comprising the steps of:
receiving, at a user device (14, 14' ,14") from a central system (12, 12'), multiple data items (1) for conducting a selection;
providing the data items (1) in a grid to enable the selection by a user;
in response to receiving a first selection, activating the selected data item to be an activated data item (1', 1", 1‴);
in response to receiving a second selection on the activated data item (1', 1", 1‴), expanding the activated data item (1', 1", 1‴) to an expanded data item (2);
wherein subsequent data items are shifted within the grid.

2. The method of claim 1, wherein in response to receiving a third selection and a fourth selection to a further data item, the expanded data item (2) returns to the state of the activated data item (1', 1", 1‴).

3. The method according to claim 1 or 2 wherein in response to receiving further selections to further data items, each activated data item (1', 1", 1‴) remains activated.

4. The method according to one of the preceding claims, wherein expanding the activated data item (1', 1", 1‴) to an expanded data item (2) further comprises including additional data to the data item (2).

5. The method according to one of the preceding claims, wherein expanding the activated data item (1', 1", 1‴) to an expanded data item (2) further comprises providing options for loading a next data item or a previous data item within the size of the expanded data item.

6. The method according to one of the preceding claims, wherein the grid is an arrangement based on end user generated activity data and a system recommendations engine.

7. The method according to one of the preceding claims, further comprising loading subsequent data items in response to previously selected data items.

8. The method according to one of the preceding claims, wherein in response to receiving a deselection, the expanded data item (2) returns to the state of the activated data item (1').

9. The method according to one of the preceding claims, wherein each selection of one data item (1', 1", 1‴) comprises changing the data item within the original area of the one data item.

10. The method according to one of the preceding claims, wherein expanding the activated data item (1', 1") comprises arranging the expanded data item (2) below a row including the activated data item (1', 1").

11. The method according to one of the preceding claims, wherein expanding the activated data item (1') comprises expanding to a width that is substantially identical or smaller than a previous row within the grid.

12. The method according to one of the preceding claims, wherein the subsequent data items are shifted within the grid such that the expanded data item (2) is arranged in the upper portion.

13. The method according to one of the preceding claims, wherein the subsequent data items are shifted within the grid such that at least further data items within two or more rows are to be selected.

14. A system (10) for processing data items comprising a central system (12, 12') and at least a user device (14, 14', 14") configured to carry out the method of one of claims 1 to 13.

15. A computer program for processing data items comprising instructions which, when the computer program is executed by a user device (14, 14',14") in a system environment (10), cause the user device (14, 14',14") and/or a central system device (12, 12') to carry out the steps of a method according to one of claims 1 to 13.
